# FASCICULE DE BREVET EUROPEEN

(11) **EP 4 281 320 B1**
(45) Date de publication et mention de la délivrance du brevet: **29.01.2025**
(21) Numéro de dépôt: 21851969.2
(22) Date de dépôt: 16.12.2021
(51) Int. Cl.: B60Q 1/04, F21S 41/20, B60R 19/50

(54) **BLOC OPTIQUE À GLACE DÉFINIE PAR BI-INJECTION CONTRÔLÉE, POUR UN VÉHICULE**
OPTISCHE EINHEIT MIT DURCH GESTEUERTE BI-INJEKTION DEFINIERTER LINSE FÜR EIN FAHRZEUG
OPTICAL UNIT WITH LENS DEFINED BY CONTROLLED BI-INJECTION FOR A VEHICLE

(30) Priorité: 20.01.2021 FR 2100531
(43) Date de publication de la demande: 29.11.2023
(73) Titulaire: Stellantis Auto SAS, 78300 Poissy (FR)
(72) Inventeur: VIDEIRA, Filipe, 78140 Velizy Villacoublay (FR); ROYER, Guillaume, 91680 Bruyères Le Chatel (FR)
(74) Mandataire: ESIP
(86) Numéro de dépôt international: PCT/FR2021/052356
(87) Numéro de publication internationale: WO 2022/157435

(56) Documents cités:
- EP-A1- 3 339 726
- DE-A1- 102009 011 898
- FR-A1- 2 813 828
- JP-A- 2011 189 820
- US-A1- 2015 023 042

## Description

### Domaine technique de l'invention

La présente invention revendique la priorité de la demande française 2100531 déposée le 20.01.2021 dont le contenu (texte, dessins et revendications) est ici incorporé par référence. L'invention concerne les blocs optiques qui sont destinés à équiper des véhicules.

### Etat de la technique

Certains véhicules, généralement de type automobile, comprennent au moins un bloc optique comprenant un boîtier comportant une paroi délimitant une ouverture avant masquée par une glace. Parfois, cette glace comporte une première partie périphérique comprenant des première et seconde parties réalisées par bi-injection. Plus précisément, la première partie est réalisée par injection d'une première matière (par exemple ayant une couleur cristal transparente), et la seconde partie est réalisée par injection d'une seconde matière (par exemple ayant une couleur noir opaque), recouvre la face arrière de cette première partie et s'étend au-delà de cette dernière (par exemple vers le bas). Cette seconde partie est destinée à masquer des parties techniques du bloc optique pour un observateur placé devant ce dernier.

Il est connu de DE 10 2009 011898 un agencement pour garniture de pare-chocs dans un véhicule à moteur. Il est connu de JP 2001 189820 une structure de guidage de pare-chocs pour un projecteur. Il est connu de FR 2 813 828 un dispositif d'éclairage ou de signalisation ayant un positionnement amélioré.

Généralement, la portion de face avant de la première partie de la première partie périphérique de la glace est placée en regard d'une seconde partie périphérique d'un équipement du véhicule, comme par exemple un pare-chocs. Cet équipement pouvant faire l'objet de dilatations en présence de variations de température, et de surcroît pouvant être déplacé temporairement vers l'arrière du véhicule lorsque ce dernier subit un petit choc frontal, on prévoit de laisser initialement une distance minimale entre la portion de face avant de la première partie de la première partie périphérique de la glace et sa seconde partie périphérique afin que ces dilatations et/ou ce déplacement vers l'arrière ne provoque pas un entrechoquement de l'équipement contre la glace qui pourrait endommager, voire casser, cette dernière.

Cependant, il arrive que dans certains véhicules on soit obligé d'installer un équipement ayant une seconde partie périphérique comprenant N protubérances dirigées vers la portion de face avant de la première partie de la première partie périphérique de la glace (avec N ≥ 1). C'est par exemple le cas lorsque l'équipement est un pare-chocs, sur la seconde partie périphérique de laquelle est clippée une pièce (comme par exemple un enjoliveur) grâce aux protubérances qui sont des moyens de clippage. Dans cette situation, la distance entre la portion de face avant de la première partie de la première partie périphérique de la glace et la seconde partie périphérique devient strictement inférieure à la distance minimale et donc on est contraint soit de décaler le bloc optique vers l'arrière, soit d'avancer l'équipement vers l'avant. La première alternative s'avère impossible à mettre en œuvre en l'absence de place disponible derrière et/ou autour du bloc optique. La seconde alternative impose une augmentation du porte-à-faux et de la longueur du véhicule, ce qui est rarement souhaité, notamment pour une question de style et/ou de comportement dynamique.

L'invention a donc notamment pour but de remédier à l'inconvénient décrit ci-avant lorsque les première et seconde alternatives ne peuvent pas être mises en œuvre.

### Présentation de l'invention

Elle propose notamment à cet effet un bloc optique destiné à équiper un véhicule et comprenant une glace comportant une première partie périphérique ayant une portion de face avant destinée à être placée en regard d'une seconde partie périphérique d'un équipement du véhicule et comprenant une première partie, réalisée par injection d'une première matière, et une seconde partie, réalisée par injection d'une seconde matière, recouvrant une face arrière de cette première partie et s'étendant au-delà de cette dernière.

Ce bloc optique se caractérise par le fait qu'en présence de la seconde partie périphérique comprenant N protubérances destinées à être dirigées vers la portion de face avant, avec N ≥ 1, la première partie comprend N trous destinés à être placés en regard respectivement des N protubérances, de sorte que toute cette portion de face avant soit normalement espacée d'au moins une distance prédéfinie de la seconde partie périphérique.

Grâce à ces trous définis dans la première partie et situés en regard respectivement des protubérances de la seconde partie périphérique, la portion de face avant se retrouve partout située à une distance minimale de la seconde partie périphérique qui est au moins égale à la distance prédéfinie, en l'absence de dilatation et de déplacement vers l'arrière de l'équipement.

Le bloc optique selon l'invention peut comporter d'autres caractéristiques qui peuvent être prises séparément ou en combinaison, et notamment :
- chaque trou peut présenter une forme qui est similaire à une section de la protubérance correspondante ;
- chaque trou peut être traversant et peut correspondre à une absence locale de première matière ;
- la première matière peut avoir une couleur cristal transparente, et la seconde matière peut avoir une couleur noire opaque ;
- la première partie périphérique peut être située dans une partie inférieure du bloc optique ;
- il peut constituer un phare avant (ou projecteur).

L'invention propose également un véhicule, éventuellement de type automobile, et comprenant un équipement comportant une seconde partie périphérique comprenant N protubérances, avec N ≥ 1, et au moins un bloc optique du type de celui présenté ci-avant et installé à proximité de cette seconde partie périphérique.

Par exemple, l'équipement peut être un pare-chocs, éventuellement installé dans une partie avant du véhicule.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, un exemple de réalisation d'un bloc optique selon l'invention, installé à côté d'un pare-chocs d'un véhicule,
[Fig. 2] illustre schématiquement, dans une vue de face du côté avant, une partie inférieure de la glace du bloc optique de la figure 1,
[Fig. 3] illustre schématiquement, dans une vue en coupe dans un plan horizontal au niveau des première et seconde parties périphériques, des parties associées du bloc optique et du pare-chocs de la figure 1,
[Fig. 4] illustre schématiquement, dans une première vue en coupe dans un plan longitudinal et vertical situé dans une zone dépourvue de trou et de protubérance, des parties associées du bloc optique et du pare-chocs de la figure 1, et
[Fig. 5] illustre schématiquement, dans une seconde vue en coupe dans un autre plan longitudinal et vertical situé dans une zone comportant un trou et une protubérance, des parties associées du bloc optique et du pare-chocs de la figure 1.

### Description détaillée de l'invention

L'invention a notamment pour but de proposer un bloc optique BO destiné à équiper un véhicule et comprenant une glace G définie par une bi-injection contrôlée adaptée à un équipement PC à protubérances PR.

Dans ce qui suit, on considère, à titre d'exemple non limitatif, que le bloc optique BO est destiné à faire partie d'un véhicule de type automobile. Mais l'invention n'est pas limitée à ce type de véhicule. Elle concerne en effet tout véhicule (terrestre, maritime (ou fluvial), ou aérien) devant comprendre au moins un bloc optique à sa périphérie.

Par ailleurs, on considère dans ce qui suit, à titre d'exemple non limitatif, que le bloc optique BO est un phare avant (ou projecteur) de véhicule. Mais il pourrait aussi s'agir d'un feu avant ou arrière.

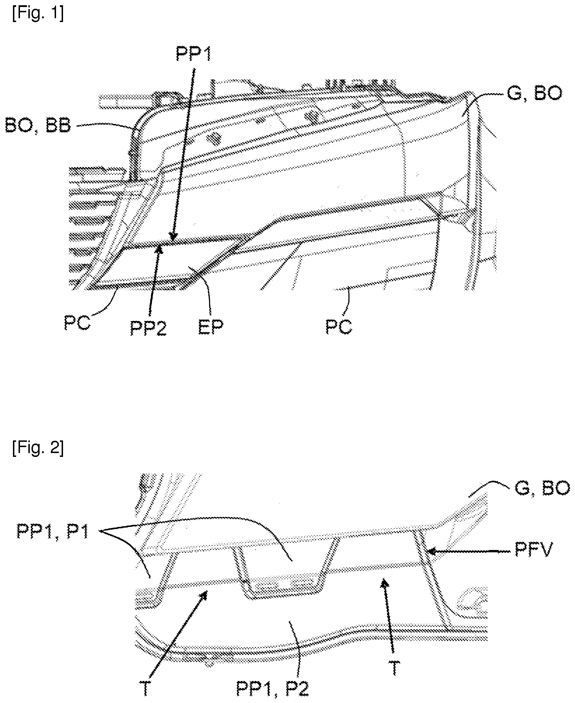

On a schématiquement illustré sur la figure 1 un exemple de réalisation d'un bloc optique BO selon l'invention (ici un phare avant), installé à côté d'un équipement PC d'un véhicule. Dans cet exemple l'équipement PC est un pare-chocs avant, mais il pourrait s'agir de n'importe quel équipement installé à proximité immédiate d'une partie d'une glace d'un bloc optique et pouvant faire l'objet de dilatations en présence de variations de température et/ou pouvant être déplacé temporairement vers l'arrière du véhicule lorsque ce dernier subit un petit choc frontal.

Comme illustré, un bloc optique BO, selon l'invention, comprend notamment un boîtier BB, logeant des éléments participant à au moins une fonction photométrique, éventuellement constitué d'au moins deux sous-parties, et délimitant une ouverture avant masquée par une glace G par laquelle sortent les photons participant à chaque fonction photométrique.

Le boîtier BB délimite une ouverture avant masquée par la glace G.

Comme illustré sur les figures 1 à 5, la glace G comporte une première partie périphérique PP1 comprenant des première P1 et seconde P2 parties et ayant une portion de face avant PFV qui est destinée à être placée en regard d'une seconde partie périphérique PP2 de l'équipement PC (située à proximité immédiate).

Dans ce qui suit et ce qui précède on entend par « face avant » une face d'un objet qui est orientée vers l'avant du véhicule, et par « face arrière » une face d'un objet qui est orientée vers l'arrière du véhicule (et donc opposée à la face avant de cet objet).

La première partie P1 de la première partie périphérique PP1 est réalisée par injection d'une première matière.

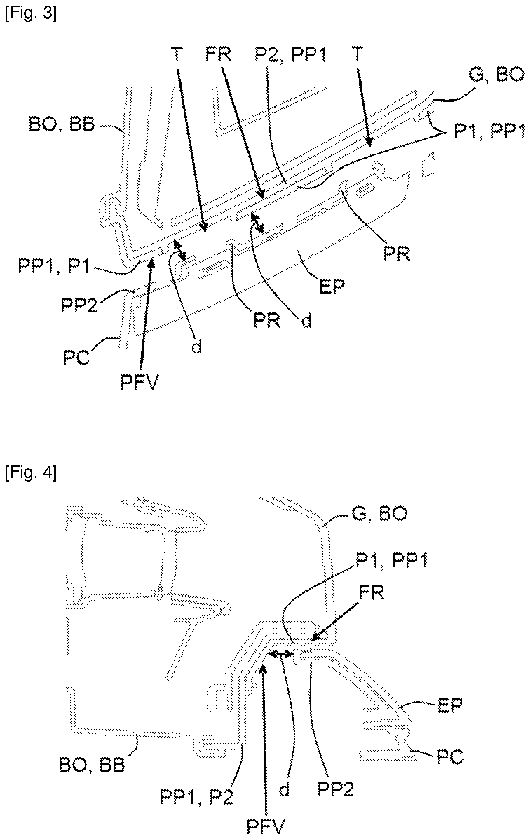

Comme cela apparaît mieux sur les figures 3 à 5, la seconde partie P2 est réalisée par injection d'une seconde matière, recouvre la face arrière FR de la première partie P1 et s'étend au-delà de cette dernière (P1).

On notera que dans l'exemple illustré non limitativement sur les figures 1 à 5, la première partie périphérique PP1 de la glace G est située dans une partie inférieure droite d'un bloc optique BO installé à gauche dans la partie avant d'un véhicule. Mais la première partie périphérique PP1 de la glace G pourrait, par exemple, être située dans une partie supérieure (droite ou gauche) ou latérale (droite ou gauche) d'un bloc optique installé à gauche ou à droite dans la partie avant ou arrière d'un véhicule.

Comme cela apparaît mieux sur les figures 2 et 3, la seconde partie périphérique PP2 de l'équipement PC comprend N protubérances PR qui sont destinées à être dirigées vers la portion de face avant PFV de la première partie périphérique PP1 de la glace G, avec N ≥ 1.

On notera que dans l'exemple illustré non limitativement (et au moins partiellement) sur les figures 1 et 3 à 5, les protubérances PR sont des moyens de clippage permettant le clippage d'un enjoliveur EP sur l'équipement PC (ici un pare-chocs). Mais ces protubérances PR pourraient assurer une autre fonction au sein de l'équipement PC.

En raison de la présence de ces N protubérances PR, la première partie P1 (de la première partie périphérique PP1 de la glace G) comprend N trous T qui sont destinés à être placés en regard respectivement des N protubérances PR. Ainsi, toute la portion de face avant PFV est normalement espacée d'au moins une distance prédéfinie d de la seconde partie périphérique PP2, comme illustré sur la figure 3. Le mot « normalement » signifie ici en l'absence de dilatation et de déplacement vers l'arrière de l'équipement PC.

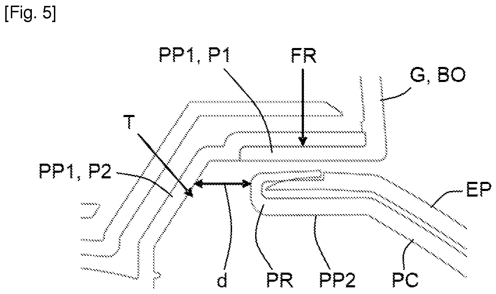

On comprendra en effet que grâce aux trous T définis dans la première partie P1 de la première partie périphérique PP1 et situés en regard respectivement des protubérances PR de la seconde partie périphérique PP2, la portion de face avant PFV de la première partie périphérique PP1 se retrouve partout située à une distance minimale de la face arrière de la seconde partie périphérique PP2 qui est au moins égale à la distance prédéfinie d, en l'absence de dilatation et de déplacement vers l'arrière de l'équipement PC. Au niveau d'une protubérance (voir figures 3 et 5), on a au moins la distance prédéfinie d entre l'extrémité arrière de cette protubérance PR et la portion de seconde partie P2 située en regard du fait de la présence d'un trou T correspondant. Au niveau d'une zone de la seconde partie périphérique PP2 dépourvue de protubérance PR (voir figures 3 et 4), on a au moins la distance prédéfinie d entre l'extrémité arrière de la seconde partie périphérique PP2 et la portion de première partie P1 située en regard. Par conséquent, en cas de dilatation de l'équipement PC et/ou de petit déplacement vers l'arrière de l'équipement PC suite à un petit choc (ici frontal), le risque d'entrechoquement de l'équipement PC contre la glace G est très réduit, et donc le risque d'endommagement, voire de bris, de cette glace G est très réduit.

On notera que chaque trou T peut présenter une forme qui est similaire à une section de la protubérance PR correspondante, comme cela apparaît partiellement sur les figures 2 et 3. Mais cela n'est pas obligatoire, car ce qui est important c'est que chaque trou T permette un possible « passage » d'une extrémité arrière de la protubérance PR correspondante. Notamment, un trou T peut être sensiblement plus large que la largeur de la protubérance PR correspondante et/ou sensiblement plus haut que la hauteur de cette protubérance PR.

On notera également que de préférence chaque trou T est traversant et correspond à une absence locale de première matière laissant apparaître la seconde matière de la seconde partie P2, comme illustré non limitativement sur les figures 2, 3 et 5. Mais cela n'est pas obligatoire. En effet, au moins un trou T peut ne pas être traversant, et dans ce cas il constitue une zone de la première partie P1 qui est simplement plus mince que là où il n'y a pas de trou T, et qui ne laisse pas apparaître la seconde matière de la seconde partie P2 située derrière lui (T).

Qu'un trou T soit traversant ou non traversant, il est préférentiellement défini lors de la première injection de la première matière, réalisée avant la seconde injection de la seconde matière sur la face arrière FR de la première partie P1. A cet effet, on peut, par exemple, utiliser un moule ayant une matrice commune aux deux injections successives et un premier poinçon définissant notamment les trous T dans la première partie P1 de la première partie périphérique PP1 de la glace G pendant la première injection. Puis, on peut ouvrir le moule, faire tourner la matrice pour qu'elle se retrouve placée en face d'un second poinçon (différent du premier), puis effectuer la seconde injection de la seconde matière sur la face arrière FR de la première partie P1 et au-delà de cette dernière (P1). Les délimitations des jonctions entre les première et seconde matières se font par choix technique.

On notera également que les première et seconde matières peuvent, par exemple, être du polycarbonate (ou PC) ou un poly-méthacrylate de méthyle (ou PMMA), mais de couleurs différentes.

On notera également que la première matière peut, par exemple, avoir une couleur cristal transparente, et la seconde matière peut, par exemple, avoir une couleur noire opaque. Mais d'autres couleurs peuvent être utilisées, notamment pour la première matière, selon les besoins et/ou selon la (les) fonction(s) photométrique(s) assurée(s) par le bloc optique. Ainsi, on pourrait envisager que la première matière soit rouge ou orange (ou ambre) transparente, par exemple.

## Revendications

1. Bloc optique (BO) destiné à équiper un véhicule et comprenant une glace (G) comportant une première partie périphérique (PP1) ayant une portion de face avant (PFV) destinée à être placée en regard d'une seconde partie périphérique (PP2) d'un équipement (PC) dudit véhicule et comprenant une première partie (P1), et une seconde partie (P2), recouvrant une face arrière (FR) de cette première partie (P1) et s'étendant au-delà de cette dernière (P1), **caractérisé en ce que** ladite première partie (P1) est réalisée par injection d'une première matière et la seconde partie (P2) est réalisée par injection d'une seconde matière, et **en ce qu'**en présence de la seconde partie
périphérique (PP2) comprenant N protubérances (PR) destinées à être dirigées vers ladite portion de face avant (PFV), avec N ≥ 1, ladite première partie (P1) comprend N trous (T) destinés à être placés en regard respectivement desdites N protubérances (PR), de sorte que toute ladite portion de face avant (PFV) soit normalement espacée d'au moins une distance prédéfinie de ladite seconde partie périphérique (PP2) ; chaque trou (T) étant traversant et correspondant à une absence locale de première matière.

2. Bloc optique selon la revendication 1, **caractérisé en ce que** chaque trou (T) présente une forme similaire à une section de la protubérance (PR) correspondante.

3. Bloc optique selon l'une des revendications 1 à 2, **caractérisé en ce que** ladite première matière a une couleur cristal transparente, et ladite seconde matière a une couleur noire opaque.

4. Bloc optique selon l'une des revendications 1 à 3, **caractérisé en ce que** ladite première partie périphérique (PP1) est située dans une partie inférieure dudit bloc optique (BO).

5. Bloc optique selon l'une des revendications 1 à 4, **caractérisé en ce qu'**il constitue un phare avant.

6. Véhicule comprenant un équipement (PC) comportant une seconde partie périphérique (PP2) comprenant N protubérances (PR), avec N ≥ 1, **caractérisé en ce qu'**il comprend en outre au moins un bloc optique (BO) selon l'une des revendications précédentes, installé à proximité de ladite seconde partie périphérique (PP2).

7. Véhicule selon la revendication 6, **caractérisé en ce que** ledit équipement (PC) est un pare-chocs.

8. Véhicule selon la revendication 7, **caractérisé en ce que** ledit pare-chocs (PC) est installé dans une partie avant.

9. Véhicule selon l'une des revendications 6 à 8, **caractérisé en ce qu'**il est de type automobile.

## Patentansprüche

1. Optische Einheit (BO) zur Ausrüstung eines Fahrzeugs und bestehend aus einem Fenster (G) mit einem ersten Umfangsteil (PP1) mit einem Teil der Stirnseite (PFV), der dazu bestimmt ist, gegenüber einem zweiten Umfangsteil (PP2) eines Ausrüstungsteils (PC) des Fahrzeugs platziert zu werden, und bestehend aus einem ersten Teil (P1) und einem zweiten Teil (P2), das eine Rückwand (FR) dieses ersten Teils (P1) bedeckt und über diesen (P1) hinausragt (P1), **dadurch gekennzeichnet, dass** der erste Teil (P1) durch Injektion eines ersten Materials und der zweite Teil (P2) durch Injektion eines zweiten Materials hergestellt wird, und zwar in Gegenwart des zweiten peripheren Teils (PP2) mit N-Vorsprüngen (PR), die dazu bestimmt sind, auf den Teil der Vorderseite (PFV) gerichtet zu sein, mit N ≥ 1, der erste Teil (P1) N Löcher (T) aufweist, die dazu bestimmt sind, gegenüber den N Vorsprüngen (PR) platziert zu werden, so dass der gesamte Abschnitt der Vorderseite (PFV) normalerweise mindestens einen vordefinierten Abstand von dem zweiten peripheren Teil (PP2) hat; jedes Loch (T) ist durch, was einer lokalen Abwesenheit der ersten Materie entspricht.

2. Optischer Block nach Anspruch 1, **dadurch gekennzeichnet, dass** jedes Loch (T) eine Form aufweist, die einem Abschnitt des entsprechenden Vorsprungs (PR) ähnelt.

3. Optischer Block nach einem der Ansprüche 1 bis 2, **dadurch gekennzeichnet, dass** das erste Material eine transparente Kristallfarbe und das zweite Material eine undurchsichtige schwarze Farbe aufweist.

4. Optischer Block nach einem der Ansprüche 1 bis 3, **dadurch gekennzeichnet, dass** der erste periphere Teil (PP1) in einem unteren Teil des optischen Blocks (BO) angeordnet ist.

5. Scheinwerfer nach einem der Ansprüche 1 bis 4, **dadurch gekennzeichnet, dass** er einen Scheinwerfer darstellt.

6. Fahrzeug mit einer Ausrüstung (PC) mit einem zweiten Umfangsteil (PP2) mit N Vorsprüngen (PR) und N ≥ 1, **dadurch gekennzeichnet, dass** es auch mindestens eine optische Einheit (BO) nach einem der vorhergehenden Ansprüche aufweist, die in der Nähe des zweiten Umfangsteils (PP2) installiert ist.

7. Fahrzeug nach Anspruch 6, **dadurch gekennzeichnet, dass** es sich bei dem Gerät (PC) um eine Stoßstange handelt.

8. Fahrzeug nach Anspruch 7, **dadurch gekennzeichnet, dass** die Stoßstange (PC) in einem vorderen Teil eingebaut ist.

9. Fahrzeug nach einem der Ansprüche 6 bis 8, **dadurch gekennzeichnet, dass** es vom Typ Kraftfahrzeug ist.

## Claims

1. Optical unit (BO) intended to equip a vehicle and comprising a window (G) comprising a first peripheral part (PP1) having a portion of the front face (PFV) intended to be placed opposite a second peripheral part (PP2) of a piece of equipment (PC) of said vehicle and comprising a first part (P1), and a second part (P2), covering a rear face (FR) of that first part (P1) and extending beyond the latter (P1), **characterised in that** said first part (P1) is made by injection of a first material, and the second part (P2) is made by injection of a second material and **in that** in the presence of the second peripheral part (PP2) comprising N protrusions (PR) intended to be directed towards said portion of the front face (PFV), with N ≥ 1, said first part (P1) comprises N holes (T) intended to be placed opposite said N protrusions (PR) respectively, so that the entire portion of the front face (PFV) is normally spaced at least a predefined distance from said second peripheral part (PP2); each hole (T) being through and corresponding to a local absence of the first matter.

2. The optical block according to claim 1, **characterized in that** each hole (T) has a shape similar to a section of the corresponding protrusion (PR).

3. An optical block according to one of claims 1 to 2, **characterised in that** said first material has a transparent crystal colour, and said second matter has an opaque black colour.

4. An optical block according to one of claims 1 to 3, **characterised in that** said first peripheral part (PP1) is located in a lower part of said optical block (BO).

5. A headlight according to one of claims 1 to 4, **characterised in that** it constitutes a headlight.

6. A vehicle comprising equipment (PC) comprising a second peripheral part (PP2) comprising N protrusions (PR), with N ≥ 1, **characterised in that** it also comprises at least one optical unit (BO) according to one of the preceding claims, installed in the vicinity of said second peripheral part (PP2).

7. A vehicle according to claim 6, **characterised in that** said equipment (PC) is a bumper.

8. A vehicle according to claim 7, **characterised in that** said bumper (PC) is installed in a front section.

9. A vehicle according to one of claims 6 to 8, **characterised in that** it is of the automobile type.
